# EUROPEAN PATENT APPLICATION

(11) **EP 2 028 848 A1**
(43) Date of publication of application: **25.02.2009**
(21) Application number: 07291038.3
(22) Date of filing: 23.08.2007
(51) Int. Cl.: H04N 5/445

(54) **Method of providing an information guide containing service information for a communication device, communication device and communication system**

(71) Applicant: Motorola, Inc., Schaumburg, IL 60196 (US)
(72) Inventor: Garrec, David, 92140 Clamart (FR); Ambrosinsi, Francois, 7510 Paris (FR); Freitag, Cecile, 92400 Courbevoie (FR)
(74) Representative: Cross, Rupert Edward Blount

(57) **Abstract**

A method of providing an information guide containing service information for services available to a communication device (6) comprises at the communication device receiving (512, 522) first service information from a reference source (4) of service information via a first communication link (10), and receiving (516, 520) instructions from another source (12) of service information via a second communication link (16). The instructions indicate how to provide the information guide from the first service information and second service information which second service information is available at the another source (12) of service information. The second service information from the another source (12) of service information is received (536) in response to a request for the information guide and the first and second service information is processed to provide the information guide according to the instructions.

## Description

### Field of the Disclosure

This disclosure relates to a method of providing an information guide containing service information for services available to a communication device, a communication device and a communication system.

### Background of the Disclosure

Electronic Service Guides (ESG), Interactive Program Guides (IPG) and Electronic Program Guides (EPG) provide information about services and programs available to a user such as service description, program content description, schedule information, acquisition methods required to access the content or service, purchase options etc. In the following the term ESG will be used to refer to EPG, IPG and ESG. The services and programs may include on-line newspapers, radio, and television and are organised into media streams in the form of audio, video and/or other types of data available through a variety of types of networks such as the internet, cable, satellite or radio networks.

The ESGs are usually presented to a user on a display of a terminal for selection and the user can navigate through the selected ESGs and further select one or more of the available programs and services. The programs and services may be currently available or may be available in the future. The terminal may be a set top box or Personal Video Recorder (PVR) with the television operating as the display, or may be a mobile terminal such as a portable radio telephone, Person Digital Assistant (PDA) or similar device.

In the context of mobile terminals, the ESG information may be acquired from a server located in a wireless communication network using radio communication links with broadcast or multicast capabilities and delivering mobile content and services. For example, broadcast systems for delivering mobile content and services using Internet Protocol (IP) based mechanisms such as IP Datacast (DVB-IPDC) and OMA BCAST include Digital Video Broadcast for Handheld devices (DVB-H), 3GPP MBMS, 3GPP2 BCMCS, WiMax, T-DMB and similar systems as well as proprietary systems such as FLO/MediaFLO.

In many cases and for some of the reasons given below, the broadcast channel or bearer does not deliver all the ESG information and some of the ESG information is received via the same or another server via another bearer including a point-to-point or unicast bearer or channel (also known as an interactive link or channel) such as a GPRS channel. The broadcast spectrum is a scarce resource and the bandwidth allocated to ESG delivery may be limited to the extent that not all the ESG information can be delivered by the broadcast bearer. Furthermore, since the broadcast bearer delivers ESG information from one server to any mobile terminal that is able to receive the ESG information, the ESG information will be of general nature applicable to all mobile terminals capable of receiving the broadcast ESG information and so will not be customised to a particular user of a mobile terminal. In addition, in the situation when a mobile terminal roams to a foreign country, the broadcast ESG information may be all or mostly irrelevant to the user of the mobile terminal. In this situation, the broadcast ESG information will have to be completed or replaced by ESG information obtained from a server via a point-to-point bearer or interactive link.

Thus, the mobile terminal may communicate with several networks, which types of networks will depend with what Radio Access Technologies (RATs) the mobile terminal is equipped. For example, possible combinations could be DVB-H and MBMS/BCMCS and a 3G data link, or DVB-H and a Wi-Fi data link or MBMS and a 3G and a Wi-Fi data link.

Obtaining ESG information via interactive links is known. For example, UK patent application GB-A-2407738 describes how ESG information is available on an interactive channel in the form of a web/WAP portal. In the arrangement described in this patent, ESG information is moved from the broadcast channel to the interactive link.

Obtaining ESG information via interactive links enables the terminal to obtain ESG information from several different sources and also enables an increase in the amount of information that can be made available to terminals.

Since part of the ESG information is received by the terminal via the broadcast channel and the user does not want to pay extra costs and endure further delays to access the ESG information, obtaining all the ESG information via a point-to-point or interactive link is not a feasible alternative method for obtaining the ESG information.

Thus, in order for an user to have ESG information most relevant to the user from the point of user preference and current location of the user, it is desirable to obtain ESG information via a broadcast link and from other sources via an interactive link.

Additionally or alternatively, the service or content provider may also want to modify broadcast ESGs for particular users. For example, the service provider may want a specific sub-group of its users to have a dedicated view of the ESGs. In another business model, in a given country, several mobile broadcasters and mobile network operators can share a common subset of ESGs. Each operator or broadcaster can then modify that common subset to reflect its own service offering. This reduces the bandwidth required for ESG delivery.

However, when a terminal receives ESG information from different sources, problems arise in determining how the terminal should operate to combine all the different received ESG information so that it fits the users or service providers needs/preferences, to identify the ESG information which was not broadcasted and so which is required to be retrieved via the interactive link and to translate a potentially complex application query for ESG information into an appropriate (from the point of view of bandwidth consumption, acquisition time etc.) query to the ESG information servers via the interactive link.

An article entitled 'Delivering Total Mobile TV' by Chris Steck of RealNetworks, Inc and dated April 2006 describes combining video streaming to mobile terminals over unicast channels with mobile broadcast in order to provide comprehensive multimedia content to the user. In addition, this article describes that the various ESGs are combined into a single guide by the network so the underlying implementation is invisible to the user. This article however does not go into the details as to how such a combination of ESG information can be achieved.

nexTView EPG decoder software is an application to decode, analyse and browse TV programme schedules transmitted on analog TV channels as defined in ETS 300 707: 'Protocol for a TV Guide using electronic data transmission'. In the Nextview EPG Decoder documentation it is described that EPG information can be aggregated in the terminal under the control of the user. In the case of overlapping EPGs from different providers, the user must prioritise the EPG information according to the priority of the providers. No information is provided from the network concerning how the EPG information should be combined. In order to aggregate the EPG information, the user is required to have a certain level of technical understanding of the system and thus, the mechanism described in this documentation is not suitable for mass-market terminals.

There is therefore a need to provide an improved method for providing an information guide based on service information received from different sources.

### Summary of the Disclosure

In accordance with one aspect of the disclosure, there is provided a method of providing an information guide containing service information for services available to a communication device as recited in claim 1 of the accompanying claims.

In accordance with another aspect of the disclosure, there is provided a communication device as recited in claim 11 or claim 12 of the accompanying claims.

In accordance with another aspect of the disclosure, there is provided a communication system as recited in claim 13 of the accompanying claims.

### Brief Description of the Drawings

A method of providing an information guide containing service information for services available to a communication device, a communication device and a communication system, in accordance with the disclosure will now be described, by way of example only, with reference to the accompanying drawings in which:
FIG. 1 is a block schematic diagram of a communication system in accordance with an embodiment of the disclosure;
FIG. 2 is a schematic diagram representing an example structure of an ESG;
FIG. 3 is a block schematic diagram of a communication device in accordance with an embodiment of the disclosure;
FIG. 4 is a block schematic diagram of an ESG client in accordance with an embodiment of the disclosure for use in the communication device of FIG. 3;
FIG. 5 is a simplified exemplary flow diagram showing the signalling between the different elements of the communication system of FIG. 1 for a method of providing an information guide in accordance with an embodiment of the disclosure;
FIG. 6 is a schematic diagram representing an example of the broadcast ESG fragments of the ESG of FIG. 2 which are received at the communication device of FIG. 3;
FIG. 7 is a schematic diagram representing an example of the broadcast ESG fragments of the ESG of FIG. 2 which are received at the communication device of FIG. 3 and for which instructions have been received to delete or delete and replace certain broadcast ESG fragments; and
FIG. 8 is a schematic diagram representing an example of the ESG fragments of the ESG of FIG. 2 which may be provided by the interactive ESG server of FIG. 1.

### Detailed Description of the Drawings

In the following description, an embodiment of the disclosure will be described with respect to a wireless terminal operating within one or more wireless communication systems, such as a 2nd generation cellular communication system known as the Global System for Mobile communication (GSM), a 3rd generation cellular communication system such as an Universal Mobile Telecommunication system (UMTS), or a DVB-H communication system. However, it will be appreciated that the disclosure may also be used in communication devices other than wireless devices, such as set top boxes, computers or similar wired devices. However, the disclosure does have particular advantages in systems where the bandwidth for delivering the ESG information is limited as in wireless systems.

Generally, the disclosure is applicable to any communication devices that receive ESG information via different communication links from different logical sources of ESG information (i.e. the different logical sources could be part of the same physical source or each part of a separate physical source).

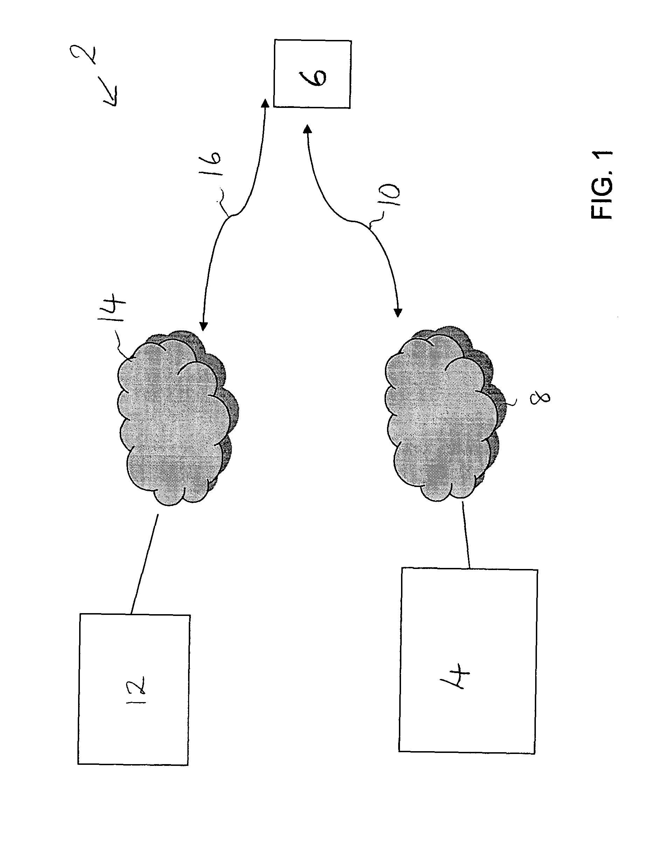

Referring firstly to FIG. 1, a communication system 2 comprises a reference source 4 of service information for providing service information to a plurality of wireless devices, only one 6 of which is shown in FIG. 1 via a first radio network 8 and radio communication link 10. Another source 12 of service information provides service information to the wireless device 6 via a second radio network 14 and radio communication link 16. The term service as used herein is intended to cover services for the end user and services for the terminal. Services for the end user include TV channels, video and audio on demand, file delivery services, bulletin board and broadcast notification services like news feed, web-surfing in a controlled environment and similar services where data is presented to the user. Services for the terminal include cryptographic key retrieval when the content is subject to DRM, roaming, radio link budget optimisation, consumption reporting, device management etc. In the embodiment shown in FIG. 1, two radio networks 8 and 14 are shown. It will however be appreciated that the disclosure may also be implemented such that only one radio network couples the reference source 4 and another source 12 of service information to the wireless device 6 via different communication links or channels. The reference source 4 and another source 12 are shown as separate blocks. These two sources of information may however both be part of the same physical server or each part of separate physical servers. For the embodiment described herein the reference source 4 is part of one physical server referred to as the reference server 4 and the another source 12 is part of another physical server referred to as the interactive server 12.

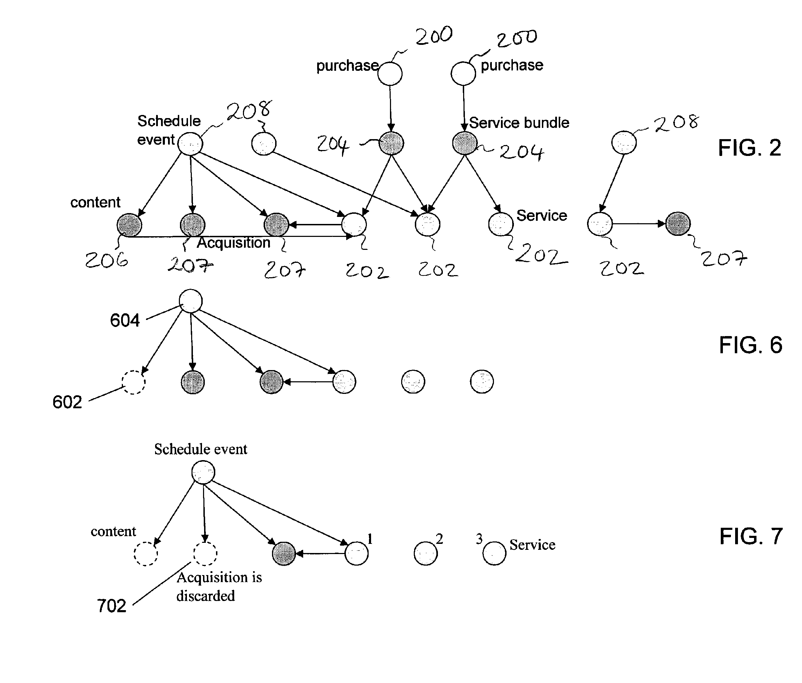

In an embodiment, the service information is ESG information and includes information for services available to the wireless device 6. ESG information generally follows a data model that defines a set of data structure which can be instantiated to describe all available services. The structures are instantiated to constitute a coherent information guide or ESG describing the available services and are independent of the way they are delivered to the wireless devices. The ESG Instance is fragmented into ESG fragments which minimise the size of the metadata delivered to the users. The partitioning of the ESG Instance into fragments for transportation is supported to enable separately updating parts of the ESG information and for performance optimisation. Thus, an ESG will comprise a plurality of ESG fragments with some of the plurality of ESG fragments including a reference or a pointer to others of the plurality of ESG fragments. An example of a set of ESG fragments of an ESG using the DVB-IPDC ESG data model is shown in FIG. 2.

Each circle in FIG. 2 represents an ESG fragment. Circle 200 represents a purchase fragment which specifies purchase information of a service which can be displayed to the user and also contains information required to make the actual purchase. Circle 202 represents a service fragment which describes a service, such as a traditional TV channel or a service supplying ring tones. Circle 204 represents a service bundle fragment which specifies a bundle of services. For example, services can be grouped together to form packages for users, such as a sports service package and cinema service package. Circle 206 represents a content fragment which contains the metadata that describes the content such as A/V, text, images independent of any particular delivery instantiation of that content. Circle 207 represents an acquisition fragment which specifies information to access a service or content. Circle 208 represents a schedule event fragment which specifies the broadcast time of a scheduled item which is a content item of a service. There are other fragments for providing information on available services. More information on the structure of an ESG for an IPDC over DVB-H system can be found in the DVB specification 'Digital Video Broadcasting (DVB); IP Datacast over DVB-H: Electronic Service Guide (ESG)', ETSI TS 102 471, November 2006.

The arrows in FIG. 2 indicate that an ESG fragment (start of the arrow) contains a reference to another ESG fragment (end of the arrow) in a similar manner to links in web pages.

In an embodiment, the reference server 4 comprises a broadcast ESG server which, along with the network 8, is part of a DVB communication system. DVB-T/H transmitters (not shown) which are part of the network 8 broadcasts the DVB services and associated signalling information on Transport Streams carried on a radio communication link 10 to the wireless device 6. Such DVB communication systems are well known in the art, and therefore the specifics of such systems will not be described in detail, apart from where appropriate for the understanding of the disclosure as described herein. The radio communication link 10 between the reference server 4 and the wireless device 6 may include a broadcast, multicast or unicast channel. In the following description, the network 8 broadcast the ESG information via a broadcast channel.

In the embodiment described herein, the another server 12 of ESG information is an interactive ESG server which, along with the network 14, is part of a GSM communication system with GPRS capability with data being communicated between the wireless device 6 and the network 14 via interactive links such as a GPRS channel. It will be appreciated that there may be a number of broadcast ESG servers and a number of interactive ESG servers capable of providing ESG information to the wireless device 6 over radio communication links.

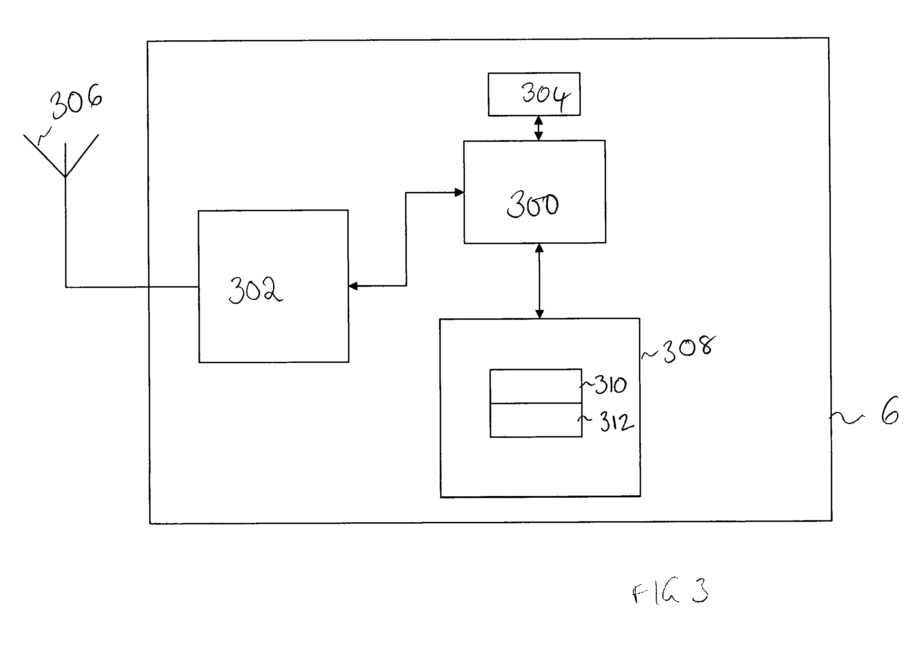

FIG. 3 is a partial schematic block diagram of an exemplary wireless device 6. As will be apparent to a skilled person, only those functional components of the wireless device that are necessary for an understanding of the disclosure have been shown and will be described. The wireless device 6 may be a portable or handheld or mobile telephone, a Personal Digital Assistant (PDA), a portable computer, portable television and/or similar devices.

The wireless device 6 comprises a control unit 300 for configuration and control of the wireless device 6. The control unit 300 is communicably coupled to a RF communication unit 302 which typically comprises a receiver, transmitter, a modulation/demodulation section, a coding/decoding section as is well known in the art, and to a Man Machine Interface (MMI) 304. The MMI 304 includes elements such as a key pad, microphone, speaker, display screen, for providing an interface between the wireless device 6 and the user of the wireless device 6. The RF communication unit 302 is coupled to an antenna 306.

The control unit 300 may be a single processor or may comprise two or more processors carrying out all processing required for the operation of the wireless device 6. The number of processors and the allocation of processing functions to the processor is a matter of design choice for a skilled person. The wireless device 6 also has a program memory 308 in which is stored programs containing processor instructions for operation of the wireless device 6. The programs may contain a number of different program elements or sub-routines containing processor instructions for a variety of different tasks, for example, for: communicating with the user via the MMI 304; and processing signalling messages received from the radio networks 8, 14. Specific program elements stored in program memory 308 include an ESG application 310 and an ESG client 312.

ESG information from the broadcast ESG server 4 (referred to as broadcast ESG information) and ESG information from the interactive ESG server 12 referred to as interactive ESG information) is received via the radio communication link 10 and 16 respectively at the antenna 306 of the wireless device 6. The broadcast and interactive ESG information is processed by the RF communication unit 302 and passed to the control unit 300. The control unit 300 processes the received ESG information according to the ESG application 310 and ESG client 312.

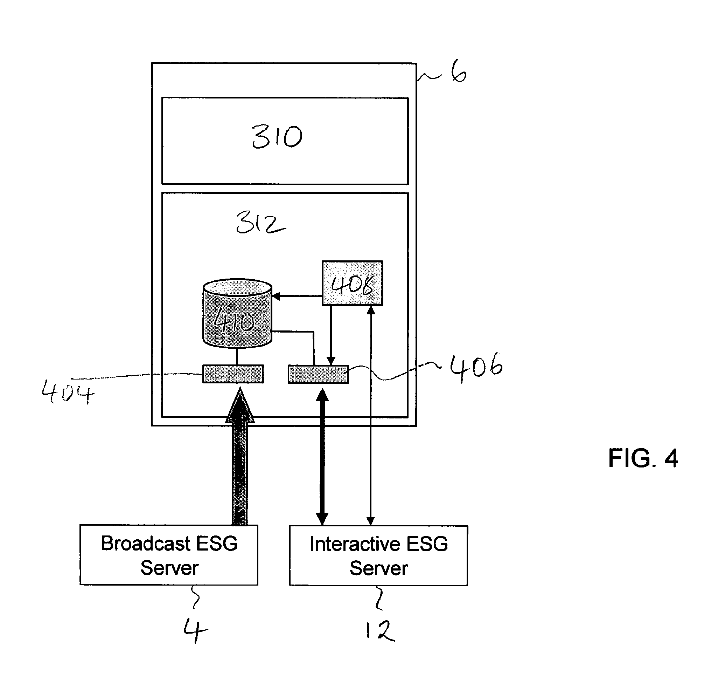

FIG. 4 is a schematic representation of an example implementation of the ESG client 312 and ESG application 310 in the wireless device 6 which is provided for illustrative purposes. The broadcast ESG information is received at block 404 of the ESG client 312 and interactive ESG information is received at block 406 of the ESG client 312. Logic block 408 of the ESG client 312 receives instructions received at wireless device 6 from the interactive ESG server 12. These instructions indicate how to provide or construct an ESG out of both received broadcast ESG information and received interactive ESG information. Logic block 408 also sends messages to the interactive ESG server 12 as will be explained in more detail below. Block 410 of the ESG client 312 receives the broadcast ESG information from block 404 and the interactive ESG information from block 406 and combines or parses the received ESG information from the different sources according to the instructions received at block 408.

The ESG application 310 controls the display of the ESG information from block 410 to the user of the wireless device 6 via the MMI 304, the configuration of the wireless device 6 to receive the service and also communicates queries concerning ESG information to the ESG client 312.

In order for the wireless device 6 to obtain the service described by an ESG, all the ESG fragments for the ESG must be received by the wireless device 6. The received broadcast ESG information includes a plurality of ESG fragments and some of the ESG fragments include pointers or references to other ESG fragments. The logic block 408 can determine whether any ESG fragments are missing from an ESG by identifying those ESG fragments to which received ESG fragments refer but which were not received by the wireless device 6. In addition, there may be additional missing ESG fragments of the ESG that the logic block 408 does not know exist because they were not referred to by any of the received ESG fragments. Thus, in order to complete the ESG, the logic block 408 transmits messages to the interactive ESG service 12 to request the missing fragments identified by the logic block 408 and also to identify and request any additional fragments that are required to complete the ESG for a service.

A method of providing an information guide to a communication device in accordance with an embodiment of the disclosure will now be described in relation to providing an ESG, such as the example ESG shown in FIG. 2, to a wireless device from ESG information received from different sources.

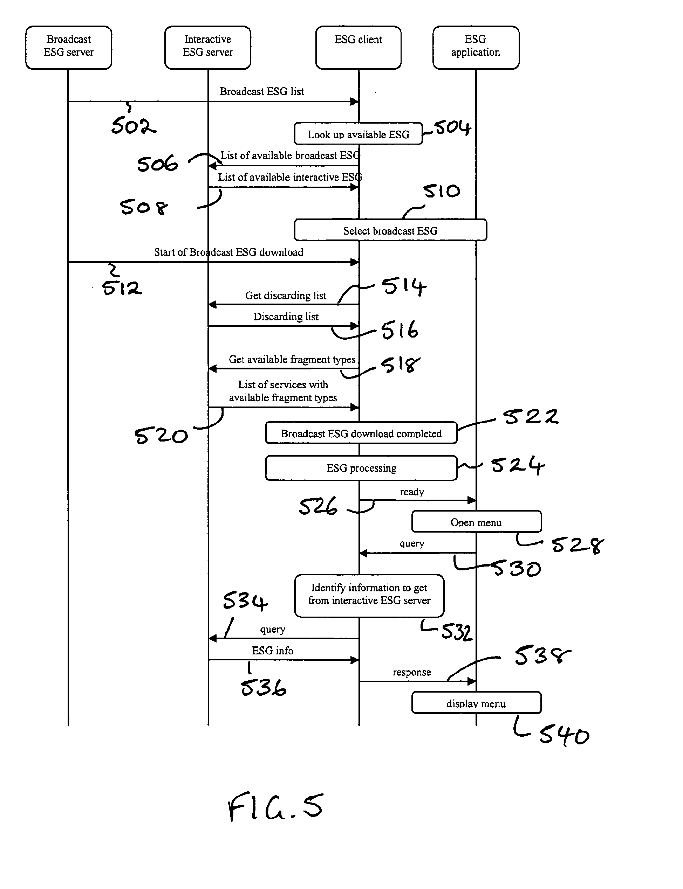

Referring now also to FIG. 5 which shows the communication paths between the broadcast ESG server 4 and the ESG client 312, the interactive ESG server 12 and the ESG client 312 and between the ESG client 312 and the ESG application 310, initially a list of the broadcast ESGs for the services available to the wireless device 6 is transmitted by the broadcast ESG server 4 to the ESG client 312 at 502. If there are several broadcast ESGs available to the wireless device 6, the wireless device 6 then has a choice of ESGs. The ESG client 312 may then initiate at 504 a look-up step to identify for which of the broadcast ESGs available to the wireless device 6 additional ESG information such as missing ESG fragments or additional ESG fragments is available from the interactive ESG server 12. The look-up step includes the ESG client 312 transmitting at 506 a request to an interactive ESG server 12 for such additional ESG information, the request including the list of available broadcast ESGs or the current location of the wireless device 6 and receiving at 508 additional ESG information, such as an additional list of ESGs, available from the interactive ESG server 12. In the case of there being several interactive ESG servers, the ESG client 312 selects an appropriate server as is well known in the art. The additional ESG information is used by the ESG client 312 automatically or the user of the wireless device 6 via the ESG application 310 and the ESG client 312 to select the appropriate broadcast ESG. Once the broadcast ESG has been selected at 510, the ESG client 312 starts to download the selected broadcast ESG information or available broadcast ESG information at 512. The downloading of the broadcast ESG information is completed at 522. The non-selected broadcast ESG information is not downloaded or downloaded and ignored.

In an alternative embodiment, in order to optimise the speed of the process, downloading the broadcast ESG may be started before the broadcast ESG has been selected.

An representation of the broadcast ESG fragments of the ESG in FIG. 2 which may be downloaded to the wireless device 6 as an example is shown in FIG. 6. As can be seen by comparing the ESG fragments in FIG. 6 with the ESG fragments in FIG. 2, not all the ESG fragments of the ESG of FIG. 2 are received from the broadcast server 4. The content fragment 602 in FIG. 6 was not received by the ESG client 312 but since the schedule fragment 604 has a reference to it (as indicated by the arrow in FIG. 2), the ESG client 312 identifies that such a content fragment is potentially available.

In another embodiment, the selection may be based only on the available broadcast ESGs and no additional ESG information is obtained in order to help in the selection. This would mean that steps 504, 506 and 508 are missed out.

At any time in the process flow of providing an ESG to the wireless communication device 6 but before the step of processing the received broadcast ESG information at 524, the ESG client 312 gets or receives from the identified interactive ESG server 12, a list of the broadcast ESG fragments that should be deleted from the broadcast ESG information and to be possibly replaced by ESG fragments from the interactive ESG server 12. This is represented in FIG. 5 by a request being sent to the interactive ESG server 12 at 514 and instructions including a discarding list being sent from the ESG server 12 to the ESG client 312 at 516. Discarding and possibly replacing ESG fragments sent from the broadcast server 4 may be desirable in order to customise a broadcast ESG for a particular user. As discussed above, since broadcast ESGs will be available to any wireless device that can receive the broadcast ESGs, the content of the broadcast ESGs will be aimed at a typical user and may need to be modified to account for a particular users needs. In order to avoid receiving instructions for all the broadcast ESG information at the same time, this step may be performed in several steps following the needs of the client server 312, the properties of the broadcast ESG or the information available in the interactive ESG server 12. For example, an initial request may ask the interactive ESG server 12 for a list of the most urgent ESG fragments (e.g. those relating to ongoing services, or services that would start soon) or a list of ESG fragments relating to a particular service and subsequent requests could then specify less urgent or the remaining services. As an example, the list could specify that the acquisition fragment 702 (in FIG. 7) should be discarded.

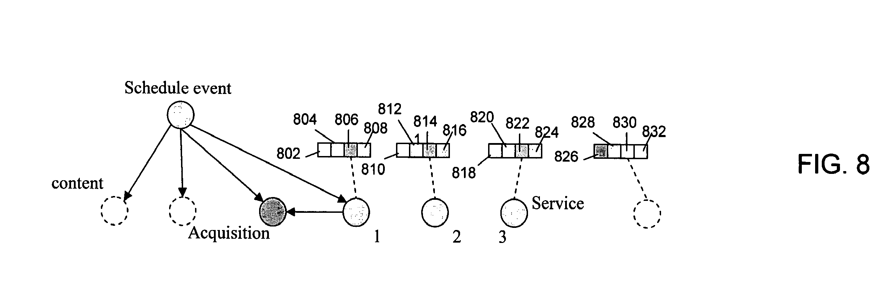

At any time in the process flow of providing an ESG to the wireless communication device 6 but before the step of processing the received broadcast ESG information at 524, the ESG client 312 gets or receives from the identified interactive ESG server 12, a list of the ESG fragments that are available for each of the services that are available to the wireless device 6 as indicated by the list of the broadcast ESGs sent to the ESG client 312 at 502. This is represented in FIG. 5 by a request for the available ESG fragments being sent to the interactive ESG server 12 at 518 and instructions including a list of the ESG fragments for the available services being sent from the ESG server 12 to the ESG client 312 at 520. The list of available ESG fragments provided by the interactive ESG server 12 may include ESG fragments for services that are not currently described in the broadcast ESG information or not delivered over the current broadcast link. The list of available ESG fragments provided by the interactive ESG server 12 may include a list of broadcast ESG fragments as well as a list of ESG fragments available only from the interactive ESG server 12. From this list, the ESG client 312 may identify the missing ESG fragments. An example of the list of available ESG fragments provided by the interactive ESG server 12 for the ESG of FIG. 2 is shown in FIG. 8. The boxes 802-808, 810-816, 818-824 and 826-832 represent the fragments which are identified in the list provided by the interactive ESG server 12 as being available. Boxes 808, 816, 824 represent purchase fragments. Boxes 806, 814, 822 represent service bundle fragments. Boxes 804, 812, 828 represent schedule event fragments. Box 826 represents an acquisition fragment.

The ESG client 312 then processes the broadcast ESG fragments at 524. This processing step includes discarding the ESG fragments (such as ESG fragment 702) listed in the instructions including the discarding list received at 516, and identifying the missing ESG fragments including those identified from the references in the received broadcast ESG fragments(such as ESG fragment 602 in FIG. 6) and those identified from the instructions including the list of available ESG fragments received at 520 (such as blocks 802 in FIG. 8).

Once the processing has been completed the ESG client 312 sends a ready message to the ESG application 310 at 526 to indicate that the ESG is ready to be processed by the ESG application 310. Processing includes displaying the ESG information or configuring the wireless device 6 to receive the services described by the ESG. During processing of the ESG by the ESG application 310, the user starts browsing the selected ESG at 528. If the ESG application 310 requests ESG fragments for the selected ESG from the ESG client 312 that are not stored within the ESG client 312 at 530 (i.e. it was not received from the broadcast server 4), the ESG client 312 identifies those ESG fragments that are not stored in the ESG client 312 and which are required by the ESG application 310 at 532 and transmits a request to the interactive ESG server 12 for the identified ESG fragments at 534. The identified ESG fragments are then transmitted to the ESG client 312 from the interactive ESG server 12 at 536 and provided to the ESG application 310 at 538 for processing at 540.

As can be seen from FIG. 5, instructions are received from the interactive server 12 in order to determine what ESG information is required from the interactive server 12 and how the determined ESG information should be combined with the broadcast ESG information but the interactive ESG information itself is only retrieved from the interactive ESG server 12 in response to a request for the ESG from the user: in other words, when it is needed. This minimises the use of the interactive channel and ensures that only interactive ESG information which is required is downloaded to the wireless device 6.

In an alternative arrangement, steps 532-540 may be performed automatically by the wireless device 6 before step 526 in order to optimise the response time or latency when the user browses the selected ESG. In this alternative arrangement, the interactive ESG information is retrieved from the interactive ESG server 12 automatically by the wireless device 6 in order to minimise latency or response time when the user is browsing the ESG. The wireless device 6 may request all missing ESG fragments from the interactive ESG server 12 in an attempt to build a complete ESG as opposed to requesting only those fragments required by a user query from the interactive ESG server 12 as discussed above.

Thus, the method in accordance with the disclosure provides an ESG based on ESG information received from two or more different sources without downloading full ESGs from the different sources. In an embodiment, a broadcast ESG server 4 provides reference ESG information and an interactive ESG server 12 which provides ESG information and instructions for providing the ESG from the ESG information received from the different sources. The instructions from the interactive ESG server 12 provides information to the ESG client 312 as to which parts of the broadcast ESG information may be deleted or deleted and replaced by interactive ESG information from the interactive ESG server 12, and which parts of the ESG may be completed by interactive ESG information acquired though the interactive link. Since only the instructions from the interactive ESG server 12 are received by the wireless device 6 at first, and only the required ESG information is retrieved from the interactive ESG server 12, costly and long downloads between the interactive ESG server 12 and the wireless device 6 are avoided.

The method in accordance with an embodiment of the present disclosure allows for an ESG to be provided based on broadcast ESG information and interactive ESG information which complements or overrides the broadcast ESG information so that the ESG can be more easily customised via the interactive ESG information whilst efficiently using the bandwidth on the broadcast and interactive channels.

The method in accordance with the disclosure also works even when the interactive ESG information is transmitted from a different source to the broadcast ESG information. This is due to the fact that the instructions transmitted from the interactive ESG server provides information as to how to provide the ESG from the broadcast and interactive ESG information.

It will be appreciated that the ESG information from the different sources may be transported by any different transport mechanism, and the ESG information may have any appropriate structure and that disclosure is not limited to the particular transport mechanisms and data structures as described herein. One source is considered a reference source since the ESG information provided by the reference source is the reference ESG information which is modified according to instructions and ESG information received from at least one other source.

Thus, according to an embodiment of the disclosure there is provided a method of providing an ESG containing service information for services available to a wireless communication device. The method comprises at the wireless communication device: receiving ESG information from a reference source of service information via a first communication link; receiving instructions from another source of service information via a second communication link, the another source of service information having additional ESG information available, the instructions indicating how to provide the ESG from the ESG information from the reference source and additional ESG information available at the another source; receiving the additional ESG information from the another source in response to a request for the ESG; and processing the ESG information received from the reference source and additional ESG information received from the another source to provide the ESG according to the instructions.

## Claims

1. A method of providing an information guide containing service information for services available to a communication device, the method comprising at the communication device:
receiving first service information from a reference source of service information via a first communication link;
receiving instructions from another source of service information via a second communication link, the instructions indicating how to provide the information guide from the first service information and second service information available at the another source of service information;
receiving the second service information from the another source of service information in response to a request for the information guide; and
processing the first and second service information to provide the information guide according to the instructions.

2. A method of providing an information guide as claimed in claim 1, wherein the instructions include information for determining the second service information to be requested from the another source of service information and for combining with the first service information so as to provide the information guide.

3. A method of providing an information guide as claimed in claim 1, wherein the instructions include a list of the service information available for the information guide and the method further comprises determining from the received first service information and the list of the service information available for the information guide, the second service information to be requested from the another source of service information.

4. A method according to any preceding claim, wherein the instructions further include instruction information for indicating parts of the first service information to be deleted.

5. A method according to any preceding claim, further comprising:
transmitting to the another source of service information information relating to the services available to the communication device from the reference source of service information;
receiving from the another source of service information information relating to the services available to the communication device from the reference source of service information and from the another source of service information.

6. A method according to claim 5, further comprising receiving a list of services available to the communication device from the reference source of service information and wherein transmitting comprises transmitting the list of services to the another source of service information.

7. A method according to any preceding claim, wherein the information guide is an ESG and the service information comprises ESG fragments.

8. A method according to any preceding claim, wherein receiving the second service information is in response to a request from one of the communication device and a user of the communication device.

9. A method according to any preceding claim, wherein the first communication link is a unidirectional communication link and the second communication link is a bidirectional communication link.

10. A method according to any preceding claim, wherein the reference source and the another source of service information are one of both part of a server and each part of separate servers.

11. A communication device for providing an information guide containing service information for services available to the communication device, the communication device comprising:
a communication unit for receiving first service information from a reference source of service information via a first communication link, for receiving instructions from another source of service information via a second communication link, the instructions indicating how to provide the information guide from the first service information and second service information available at the another source of service information and for receiving the second service information from the another source of service information in response to a request for the information guide; and
a control unit coupled to the communication unit for processing the first and second service information to provide the information guide according to the instructions.

12. A communication device arranged in operation to perform the steps as recited in any one of the claims 1-10.

13. A communication system comprising:
a reference source of service information;
another source of service information; and
a communication device as claimed in claim 11 or 12.
